(19) Europäisches Patentamt
European Patent Office
Office européen des brevets

(11) **EP 1 892 599 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(51) Int Cl.:
***G05D 1/02*** (2006.01)

(21) Anmeldenummer: **07016709.3**

(22) Anmeldetag: **26.08.2007**

(54) **Steuerung eines Mobilgeräts durch Linienorientierung**

Driving a mobile device using orientation with regard to lines

Conduite d'un appareil mobile avec orientation par rapport à des lignes

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.08.2006 DE 102006040146**

(43) Veröffentlichungstag der Anmeldung:
**27.02.2008 Patentblatt 2008/09**

(73) Patentinhaber: **Inmach Intelligente Maschinen GmbH**
**89081 Ulm (DE)**

(72) Erfinder:
• **Kämpke, Thomas**
**89075 Ulm (DE)**

• **Kluge, Boris**
**89077 Ulm (DE)**
• **Strobel, Matthias**
**89079 Ulm (DE)**

(74) Vertreter: **Meyer, Thorsten**
**Meyer Patentanwaltskanzlei**
**Pfarrer-Schultes-Weg 14**
**89077 Ulm (DE)**

(56) Entgegenhaltungen:
**WO-A-2004/082899        FR-A- 2 861 855**
**US-A1- 2006 020 369**

## Beschreibung

Die Erfindung betrifft ein Verfahren zur Steuerung eines Mobilgeräts, das sich selbsttätig in einer Umgebung mit einer darin befindlichen Arbeitsfläche bewegen kann, sowie ein solches Mobilgerät.

Bekannt sind selbstfahrende Geräte wie z. B. selbstfahrende Rasenmäher und selbstfahrende Reinigungsroboter, die zur flächendeckenden Bearbeitung zufällige Bewegungen, sog. Random-Walk-Bewegungsstrategien, nutzen. Einer solchen Random-Walk Strategie kann optional eine systematische Befahrung des Randes vorgeschaltet sein und lokal können auch systematische, nicht-zufällige Bewegungskonstrukte, die durch ein Zufallsverfahren zusammen gesetzt werden, zum Einsatz kommen. Die Ausführung von geplanten Gerätebewegungen erfolgt typischerweise mit einer auf Odometrie basierenden Steuerung.

Eine wesentliche Eigenschaft der Positionsbestimmung selbstfahrender Geräte durch Odometrie (wie Encoder an den Antriebsrädern, inkrementelle Sensorik) ist, dass sich bei immer größer werdender Fahrtstrecke die geräteinterne Schätzung der Position und Orientierung zunehmend verschlechtert, d.h. von den wahren Werten immer deutlicher entfernt, bis hin zu einem unbrauchbaren Ausmaß. Es ist somit unmöglich, eine zur Bewegungssteuerung geeignete Navigation - anders als bei reinen Random-Walk-Bewegungsstrategien - ausschließlich mittels odometrische Positionsbestimmung durchzuführen.

Eine Positionsbestimmung im kompletten Einsatz- bzw. Arbeitsbereich, wie sie teilweise auf mobilen Robotersystemen eingesetzt ist, erfordert im Allgemeinen aufwendige und teure Sensorik und hohe Rechenleistung zur Auswertung der Sensorinformation oder zumindest die Strukturierung der Einsatzumgebung durch Platzierung von Markierungen und die roboterseitige Ausstattung mit mindestens einem Wahrnehmungsmodul für diese Markierungen und einer die Wahrnehmungen interpretierenden Maschinensteuerung.

Aus der WO 03/040846 und aus der WO 99/59042 ist bekannt, eine Abstoßung als Mittel zur Bewegungssteuerung, typischerweise als Abstoßung vom Rand der Arbeitsfläche mit der Absicht der Flächenfüllung vorzusehen. Es wird eine meist geradlinige Bewegung lediglich entweder durch das Auftreffen auf ein Hindernis oder die Arbeitsraumberandung oder im Falle der WO 03/040846 auch durch bereits befahrene und in einer Kartierung festgehaltene Bereich beendet. Durch Missachtung der tatsächlichen Ausführungsgenauigkeit führt diese Vorgehensweise daher oft, auch unter Berücksichtigung von möglichen Überlappungen der Arbeitseinheit zwischen nebeneinander liegenden Bahnen, zu nicht bearbeiteten Teilflächen.

Aus der FR-A-2 861 855 ist ein Verfahren zum Kehren einer Oberfläche vermittels eines sich selbständig darauf bewegenden Automaten bekannt, wobei Oberfläche komplex gestaltet sein soll und eine physische Barriere und/oder Hindernisse aufweisen kann, wobei die Reinigung in Teilfeldern der Oberfläche erfolgt. Dabei erfolgt eine Orientierung der Bewegung des Automaten entlang der Begrenzungslinie der Oberfläche wobei die Teilflächen entlang dieser abgearbeitet werden.

Aufgabe der Erfindung ist es ein Mobilgerät, das sich selbsttätig in einer Umgebung mit einer darin befindlichen Arbeitsfläche bewegen kann, und ein Verfahren zur Steuerung eines solchen zur Verfügung zu stellen, bei dem die Navigation in der Umgebung verbessert ist.

Diese Aufgabe wird durch ein Verfahren zur Steuerung nach den Merkmalen des Anspruchs 1 und ein Mobilgerät nach den Merkmalen des Anspruchs 9 gelöst.

Das erfindungsgemäße Verfahren zur Steuerung eines Mobilgeräts, das sich selbständig in einer Umgebung mit einer darin befindlichen Arbeitsfläche bewegen kann, wobei eine Steuerungseinrichtung zur Planung und Festlegung der Bewegung vorgesehen ist, schlägt vor, dass die Richtung einer in der Umgebung befindlichen Navigationslinie durch hierzu verwendete Sensoren und/oder durch wenigstens teilweises Abfahren und hierzu ermittelte Odometriedaten erfasst wird, und dass relativ zu dieser Richtung unter einem Abstoßungswinkel eine Bewegung des Mobilgeräts vollzogen wird, und geplante Bewegungsmuster zur Überstreichung von Teilflächen der Arbeitsfläche ausgeführt werden, wobei die Länge der Abstoßungsbewegung durch die Sensierungsgenauigkeit und die Ausführungsgenauigkeit beschränkt wird,
dabei wird eine Fehlausführung der Bewegung entlang von Teilstücken des Bewegungsmusters

- in Richtung erkannt durch Vergleich von tatsächlichem ($\alpha 4$) und erwartetem ($\alpha$) Aufschlagwinkel auf eine Navigationslinie und/oder

- in Richtung erkannt durch Vergleich von erwarteter und tatsächlich sensierter Richtung einer Navigationslinie relativ zum Mobilgerät und/oder

- in Länge erkannt durch Vergleich von tatsächlicher und erwarteter Distanz bis zu einer Navigationslinie (N)

und insbesondere eine entsprechende Parameteradaption der Bewegungsausführung des Bewegungsmusters durchgeführt, so dass in weiterer Abfolge von Teilstücken Fehlausführungen vermieden oder gemindert werden können.

Von Vorteil wird die Eindringtiefe (E) durch die Sensierungsgenauigkeit und die Ausführungsgenauigkeit beschränkt.

Das Verfahren zur Steuerung eines Mobilgeräts orientiert seine Bewegung an einer oder mehrerer Navigationslinien in der Einsatzumgebung. Bei Navigationslinien handelt es sich um vorhandene Linien, und/oder speziell ausgebrachte Linien, und/oder um rechnerisch bestimmte Linien oder um eine beliebige Kombination davon. Es kann sich bei einer Navigationslinie auch um die Berandung oder um Abschnitte der Berandung der Arbeitsfläche handeln. Handelt es sich beispielsweise bei der Einsatzumgebung um eine Turnhalle, so können Spielfeldlinien als Navigationslinien genutzt werden.

Weiterhin kann eine Navigationslinie wenigstens teilweise durch sensorisch erfassbare Markierungen ausgebildet sein. Aus physikalischen oder technischen Gründen kann eine Navigationslinie auch in Form einer oder mehrerer Schleifen ausgeführt sein.

Die Steuerung des Mobilgeräts nutzt diese Linien, um sich vorzugsweise parallel auf, unter oder neben ihnen zu bewegen, sich von diesen zu entfernen und wieder zu nähern. Dies resultiert in zahlreichen Bewegungsmustern, die aus Abfahrung, Abstoßung und Annäherung bestehen.

Dem folgend ist nach einer vorteilhaften Ausgestaltung des Verfahrens vorgesehen, dass ein Bewegungsmuster so ausgestaltet ist, dass ein Zurückkehren zur Navigationslinie nach wenigen gefahrenen Teilstücken und geringer zurückgelegter Distanz erfolgt und eine erneute Abstoßung unter einem von der Steuerungseinrichtung gemäß der erfassten Richtung und/oder der Position in der Umgebung und/oder dem Verlauf der Navigationslinie festgelegten Abstoßungwinkel vollzogen wird.

Das erfindungsgemäß hier Vorgeschlagene besteht in Verfahren und einem durch diese Verfahren gesteuerten, selbstfahrendem Gerät, die unter alltäglichen Einsatzbedingungen realisierbar sind. Hierzu gehört beispielsweise, dass der Verlauf einer Navigationslinie relativ zur Bewegung des Mobilgeräts sensorisch erfasst wird bzw. dass sich das Mobilgerät entlang eines Wegabschnitts möglichst parallel ausrichtet um dadurch Abstoßungs- und spätere Annäherungsbewegungen möglichst genau durchführen zu können.

Es ist eine vorteilhafte und alleinstellende Eigenschaft dieser Erfindung, dass sich Navigationslinien auch im Inneren der Einsatzumgebung befinden können.

Es ist eine weitere vorteilhafte Eigenschaft dieser Erfindung, dass der Verlauf von Navigationslinien über Wegabschnitte unterschiedlicher Länge durch das Mobilgerät erfasst wird. Je länger diese Abschnitte sind, desto genauer kann deren Verlauf relativ zur Bewegungsrichtung des selbstfahrenden Geräts erfasst werden. Hier greifen die bekannten Gesetzmäßigkeiten der Ausgleichsrechnung. Je genauer der Verlauf einer Navigationslinie erfasst wird, desto genauer kann eine Abstoßungsbewegung durchgeführt werden.

In einer vorteilhaften Ausprägung der Erfindung wird die Eindringtiefe in das Innere der Arbeitsfläche bzw. die Entfernung von einer Navigationslinie durch die Länge des zuvor parallel abgefahrenen Weges bestimmt. In einer weiteren, vorteilhaften Ausprägung der Erfindung wird die Länge des Wegabschnitts, dem eine Navigationslinie gefolgt wird, so groß gewählt, dass eine vorgesehene Abstoßung tatsächlich bewerkstelligt werden kann.

Anzahl, Art und Güte der verwendeten Sensoren, deren Abtastfrequenz und die Art und Güte der zugeordneten Sensordatenauswertung beeinflussen die Genauigkeit (welche im folgenden als Sensierungsgenauigkeit bezeichnet wird), mit der Navigationslinien erfasst werden bzw. mit der sich das selbstfahrende Gerät an einer Navigationslinie ausrichtet. Die bei den Bewegungsmustern vorgesehene Eindringtiefe bzw. Länge der Abstoßungsbewegung nimmt unter ansonsten gleichen Bedingungen monoton mit der Sensierungsgenauigkeit zu. Unter dieser Genauigkeit, der Sensierungsgenauigkeit, wird die Genauigkeit in Entfernung und Winkel verstanden, mit der die Lage der Navigationslinie erfasst wird. In Abgrenzung zur generellen Verwendung des Begriffs Sensierungsgenauigkeit wird diese hier so verwendet, dass auch die Bewegung des Mobilgeräts zur Lageerfassung der Navigationslinie herangezogen werden kann.

Beispielsweise kann ein Mobilgerät von einer Position aus eine Navigationslinie auf 15 cm und 10 Winkelgrade genau erfassen. Folgt das Mobilgerät der Navigationslinie um 0,5 m, so können diese Werte auf 10 cm und 5 Winkelgrade sinken. Folgt das Mobilgerät derselben Navigationslinie um weitere 0,5 m, so können diese Werte nun auf 8 cm und 4 Winkelgrade sinken.

Bei einer besseren Sensierungsgenauigkeit können die jeweiligen Werte beispielsweise sein: 12 cm und 5 Winkelgrade, 8 cm und 3 Winkelgrade und 7 cm und 2 Winkelgrade.

Neben der Sensierungsgenauigkeit ist es auch notwendig die sogenannte Ausführungsgenauigkeit bei dem hier vorgeschlagenen Steuerungsverfahren zu berücksichtigen. Die Ausführungsgenauigkeit ist die Genauigkeit in Entfernung und Winkel, mit der eine Bewegung, z.B. eine Abstoßungsbewegung, im Allgemeinen ausschließlich mit inkrementeller Sensorik ausgeführt werden kann.

Die Verknüpfung von Sensierungsgenauigkeit und Ausführungsgenauigkeit kann z.B. durch Addition der jeweiligen Entfernungs- und Winkelangaben erfolgen.

Aus der Berücksichtigung der Sensierungsgenauigkeit und Ausführungsgenauigkeit resultiert die Möglichkeit und Sinnhaftigkeit von Beschränkungsvorgaben für Abstoßungsbewegungen. D.h. erfindungsgemäß wird eine Abstoßungsbewegung von einer Navigationslinie bei einer entsprechend vorgegebenen Beschränkung der Eindringtiefe beendet, bevor ein Hindernis oder eine Berandung oder eine andere Navigationslinie erreicht wird.

Die bereits erwähnten, unzureichenden Ansätze mit Abstoßung, wie sie beispielsweise in WO 03/040846 oder WO 99/59042 beschrieben sind, begrenzen die Eindringtiefe nicht.

Die Beschränkung S der Eindringtiefe und/oder der Länge der Abstossungsbewegung kann beispielsweise als Funktion der zurückgelegten Entfernung D entlang einer Navigationslinie formuliert werden, z.B. $S = c * D^a$, wobei a = 1 einer linearen Funktion entspricht. Die Konstante c wird durch die Genauigkeit der Sensorik bestimmt. Je größer diese Genauigkeit, desto größer die Konstante.

Eine weitere Möglichkeit, die Beschränkungen festzulegen, besteht darin, diese ggf. mit gegebenen Randparametern, wie beispielsweise einer maximal tolerierbaren und/oder realisierbaren Überlappung der Arbeitsbreite zwischen zwei benachbarten Bahnabschnitten, experimentell zu ermitteln.

Dies kann entweder manuell oder mittels automatisch durchgeführter Experimente des Mobilgeräts erfolgen.

Abstoßungsbewegungen können nicht nur von einer einzigen Navigationslinie, sondern auch von einer Mehrzahl solcher Linien erfolgen. Diese dürfen untereinander verbunden sein, d.h. sich berühren, schneiden und verzweigen. Es kann auch mehrere unverbundene Einzellinien oder mehrere unverbundene Ansammlungen von Linien geben. Diese dürfen teilweise auf der Berandung und teilweise im Inneren liegen.

Nach einer Variante der Erfindung sind die gefahrenen Teilstücke des Bewegungsmusters im wesentlichen geradlinig, also auch auf solchen Teilstücken, die nicht einer Navigationslinie folgen.

Nach einer weiteren Ausgestaltung der Erfindung ist vorgesehen, dass der Verlauf der Navigationslinie bezüglich seiner Gekrümmtheit erfasst wird, und eine Anpassung des Abstoßungswinkels dergestalt vorgenommen wird, dass Teilstücke von Bewegungsmustern im wesentlichen parallel oder senkrecht zueinander gefahren werden.

Ein vorteilhaftes Bewegungsmuster fährt eine Navigationslinie oder einen Abschnitt davon mehrfach ab, so dass die Abstossungs- und Annäherungsbewegungen eine Flächenfüllung des Einsatzgebiets mit Hilfe von Überlappungen erzeugen.

Während der Bewegung des Mobilgeräts können vorübergehend sämtliche Berandungen und Navigationslinien außerhalb des Wahrnehmungsbereichs der Sensoren liegen.

Nach einem weiteren Aspekt der Erfindung ist ein Mobilgerät vorgeschlagen, das sich selbsttätig in einer Umgebung mit einer darin befindlichen Arbeitsfläche bewegen kann, und zur Ausführung des Verfahrens nach einem der Ansprüche 1 bis 8, wobei eine Steuerungseinrichtung zur Planung und Festlegung der Bewegung vorgesehen ist, wobei die Richtung einer in der Umgebung befindlichen Navigationslinie durch hierzu verwendete Sensoren und/oder durch wenigstens teilweises Abfahren und hierzu ermittelte Odometriedaten erfasst wird, und dass relativ zu dieser Richtung unter einem Abstoßungswinkel α eine Bewegung des Mobilgeräts vollzogen wird, und geplante Bewegungsmuster zur Überstreichung von Teilflächen der Arbeitsfläche ausgeführt werden.

Bei dem Mobilgerät handelt es sich bevorzugterweise um ein Gerät zur Flächenbearbeitung.

Nachfolgend wird die Erfindung anhand der Zeichnungen weiter erläutert. Im Einzelnen zeigt die schematische Darstellung in:

Fig. 1  eine schematische Aufsicht auf eine erfindungsgemäße Flächen füllende Bewegung mit Abstoßung an einer Na- vigationslinie, die durch die Berandung gebildet ist,

Fig. 2  eine schematische Draufsicht auf eine gekrümmt be- randete Arbeitsfläche, wobei sich im Innern der Arteisfläche noch eine gerade Navigationslinie befin- det, an der die Abstoßung vorgenommen wird,

Fig. 3  eine schematische Draufsicht auf eine geplante und eine tatsächliche Ausführung eines Bewegungsmusters,

Fig. 4  eine schematische Draufsicht auf eine Situation mit unterbrochener Navigationslinie,

Fig. 5  eine schematische Draufsicht auf eine Situation, in der Markierungen entlang der Navigationslinie Anweisungen für das Mobilgerät enthalten,

Fig. 6  eine schematische Ansicht auf einen gekrümmten Be- randungsabschnitt als Navigationslinie, wobei erläutert wird, dass ein Geradensegment als Navigations- linie genähert wird, und

Fig. 7  eine schematische Draufsicht auf eine Situation, in der Orientierungsfehler durch Ausrichtung entlang einer Navigationslinie korrigiert werden.

Die in den Figuren gleichen Bezugsziffern bezeichnen gleiche oder gleich wirkende Elemente.

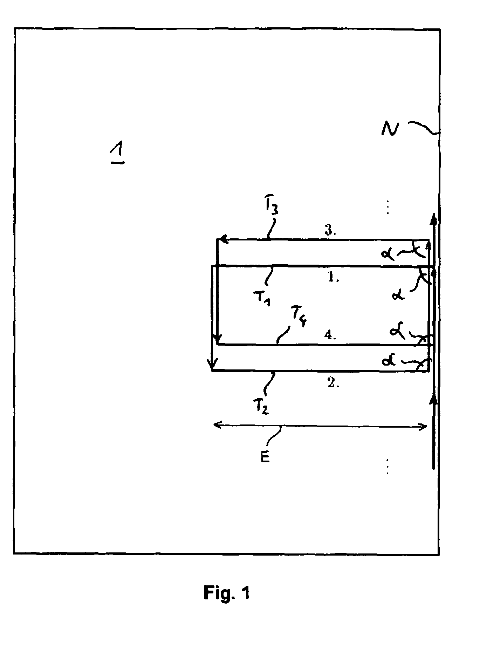

Fig. 1 zeigt eine schematische Ansicht einer rechteckigen Arbeitsfläche 1 mit bevorzugter aber nicht ausschließlicher, sich an der Berandung orientierender, mäanderartiger Bewegungssteuerung entlang der die Berandung bildenden Navigationslinie N mit begrenzter Eindringtiefe E. Die Fortbewegung erfolgt dabei mäandernd unter vollständiger Flächenüberstreichung mittels sich wiederholender Struktur in Teilstücken T1 bis T4 in der Reihenfolge 1., 2., 3., 4., usw. gefahrenen. Der Abstoßungswinkel ist im gezeigten Beispiel 90°.

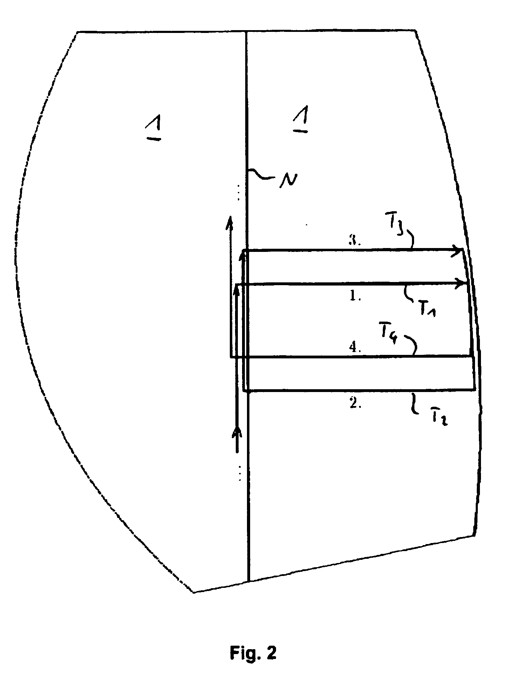

Fig. 2 zeigt eine gekrümmt berandete Arbeitsfläche 1 mit einer ähnlichen, sich an einer in der Mitte der Arbeitsfläche befindlichen geraden Navigationslinie orientierender, mäanderartiger Bewegungssteuerung. Die Teilstücke T1 bis T4 werden wieder in der Reihenfolge 1., 2., 3., 4., usw. gefahrenen. Die - wiederum rechtwinklige - Abstoßung erfolgt dabei an der geraden, in der Mitte befindlichen Navigationslinie N.

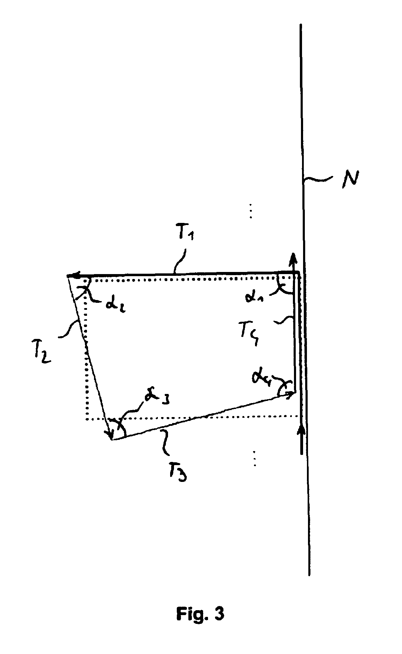

In Fig. 3 ist eine geradlinige Navigationslinie N gezeigt, sowie ein tatsächliches und ein geplantes Bewegungselement entlang von Teilstücken T1 bis T4, bei dem eine Diskrepanz zwischen erwartetem rechten und tatsächlichem Winkel bei Wiedererreichen der Navigationslinie N in Folge von tatsächlich gefahrenen Teilstrecken (durchgezogene Linie) gegenüber geplant gewesenen Teilstrecken (gepunktete Linie) auftritt. Diese Diskrepanz kann sowohl zur Korrektur des gefahrenen Bahnelements als auch zur Adaption der Bewegungssteuerung für noch zu fahrende Bahnelemente verwendet werden.

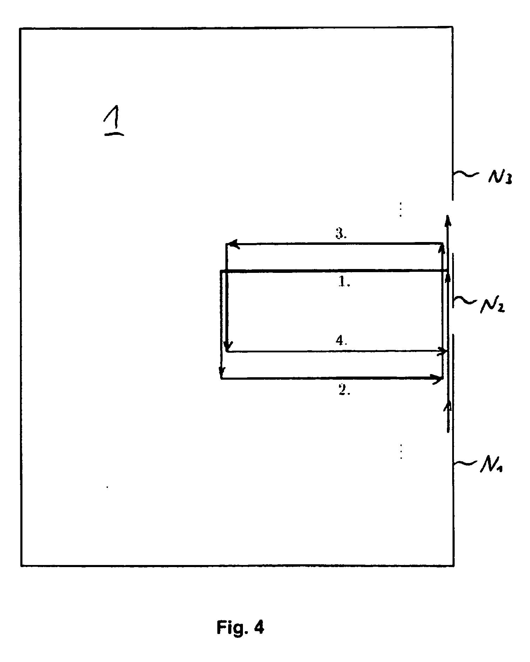

Eine unterbrochene Navigationslinie mit Teilstücken N1, N2, N3, ist in Fig. 4 gezeigt, die zur Orientierung für eine mäanderartige Bewegungssteuerung verwendbar ist, wobei die Unterbrechung erkannt wird.

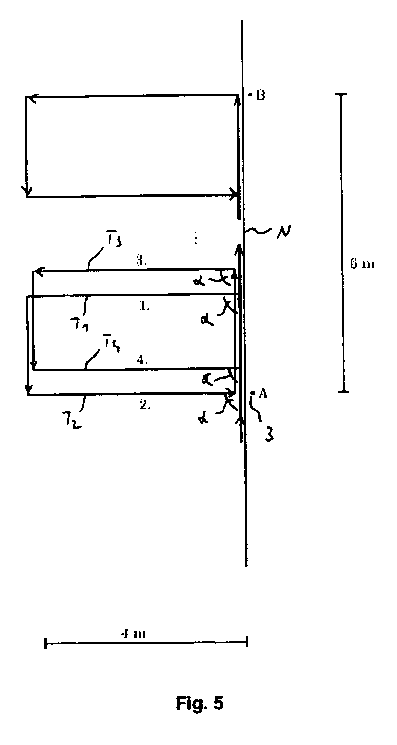

Figur 5 zeigt eine mäanderartige Bewegungssteuerung entlang eines Abschnitts von A nach B einer Navigationslinie N. Die Bewegungsinformation wird mittels Markierungen vorgegeben, die an oder nahe der Navigationslinie platziert sind. Die Bewegungsinformation kann in den Markierungen selber gespeichert sein oder sie kann diesen Markierungen zugeordnet sein oder es kann eine Mischform vorliegen.

Die Strecke von Punkt A nach Punkt B wird dabei in sich wiederholender Struktur in Teilstücke T1 bis T4 in der Reihenfolge 1., 2., 3., 4., usw. mäandernd gefahrenen. Der Abstoßungswinkel ist im gezeigten Beispiel wiederum 90°.

An Punkt A kann dabei eine Markierung angebracht sein, die dem Mobilgerät die Information aufprägt, dass dieses von dem Punkt A bis Punkt B sich entlang der Navigationslinie mäandernd unter Abstoßung von 90° zur Navigationslinie an dieser mäandernd fortbewegt. Im Beispiel wird so eine Fläche von 4 mal 6 Metern unter 100 prozentiger Flächenabdeckung überstrichen.

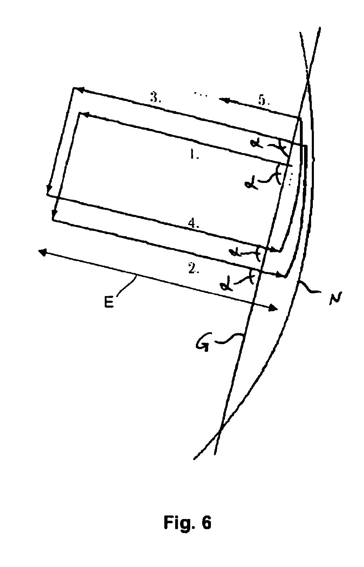

In Fig. 6 ist schließlich ein Fall gezeigt, in dem einem gekrümmten Berandungsabschnitt als Navigationslinie N ein Geradensegment G zugeordnet ist, mittels dessen die Einhaltung eines vorgegebenen Abstoßungswinkels und einer maximalen Eindringtiefe E ermöglicht wird; die Abstoßungsorte liegen dabei auf dem gekrümmten Berandungsabschnitt.

Eine vorteilhafte Ausprägung der Erfindung besteht darin, dass die Historie der Gerätebewegung gespeichert wird und eine Erwartungshaltung über das nächste Erreichen der Berandung aufgebaut wird. Diese betrifft z.B. den Winkel, in dem ein Erreichen der Berandung erfolgen soll. Kommt es innerhalb der Steuerungsgenauigkeit zu einer Abweichung von diesem Sollwert, so kann eine Korrektur vorgenommen werden. Diese kann in der partiellen Wiederholung der Gerätebewegung bestehen. Alternativ können Soll-Ist-Abweichungen zur Adaption von Parametern der Bewegungssteuerung herangezogen werden. Dies ist in einmaliger oder iterativer Weise möglich.

Es ist bekannt, dass bei fahrenden Mobilgeräten durch Unsicherheiten bezüglich des exakten Radabstandes systematische Fehler in der Odometrieberechnung auftreten. Diese wirken sich so aus, dass der tatsächliche Drehwinkel des Roboters dem geschätzten Drehwinkel um einen konstanten Faktor nach- oder voraus eilt.

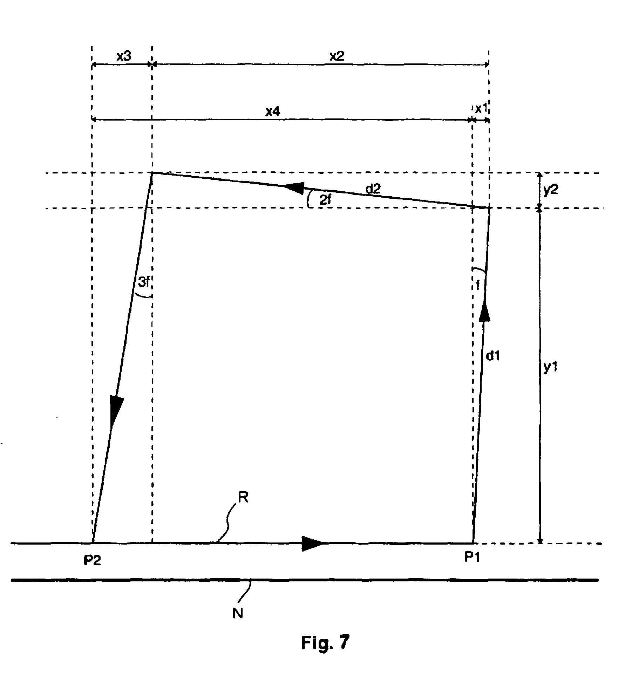

In Fig. 7 ist angenommen, dass bei einer odometrisch geschätzten Drehung des Roboters die tatsächliche Drehung um 4f kleiner als 2pi ist. D.h. wenn ein rechter Winkel zu fahren ist, fällt dieser systematisch um den Winkel f zu klein aus. Möchte man das in der Zeichnung veranschaulichte Bahnprimitiv zur Flächendeckung um jeweils eine bestimmte Distanz versetzt wiederholt ausführen, so muss offenbar eine Korrektur der Abstoßungspunkte auf der Roboterbahn R vorgenommen werden.

Es ist

$$x1 = d1 \sin f$$

$$y1 = d1 \cos f$$

$$x2 = d2 \cos 2 f$$

$$y2 = d2 \sin 2 f$$

$$x3 = ( y1 + y2 ) \tan 3 f$$

Für sehr kleine f (es wird davon ausgegangen, dass der Radabstand bereits relativ genau bekannt ist) gilt also in erster Näherung:

$$x1 = d1 \ f$$

$$y1 = d1$$

$$x2 = d2$$

$$y2 = d2 \ 2 \ f$$

und

$$x3 = ( d1 + d2 \ 2 \ f \ ) \ 3 \ f \qquad = d1 \ 3 \ f$$

da f*f für praktische Belange gleich null ist. Die tatsächliche Distanz x4 zwischen dem letzen Abstoßungspunkt P1 und dem aktuellen Annäherungspunkt P2 beträgt also etwa

$$x4 = x2 + x3 - x1$$
$$= d2 + 2 \ f \ d1$$

Das Mobilgerät muss also um die Strecke 2 f d1 weiter der Navigationslinie folgen als im fehlerfreien Fall, um den früher benutzen Abstoßungspunkt P1 wieder zu erreichen.

Diese Korrektur ist nicht nur einmalig zur Korrektur des Abstoßungspunktes durch Vergleich der gemessenen Richtungen der Navigationslinien möglich, sondern kann auch dazu dienen, eine genauere Schätzung des Radabstandes zu erhalten. Dies ist insbesondere vorteilhaft, wenn der effektive Radabstand von den Gegebenheiten des Untergrundes abhängt.

Eine weitere vorteilhafte Eigenschaft dieses Verfahrens ist, dass lediglich eine Richtungsinformation über die Navigationslinie benötigt wird. Bei anderen Ansätzen, wo eine Korrektur der kompletten odometrischen Positionsschätzung durchgeführt wird, wie beispielsweise in der WO 03/040846 A1, muss zusätzlich Information über die relative Verschiebung ermittelt werden, was höheren Aufwand bezüglich Sensorik und/oder Rechenleistung erfordert oder auf Kosten der Robustheit des Verfahrens geht.

**Bezugszeichenliste**

Ti      Teilstück

N      Navigationslinie
Ni     Teilstücke einer Navigationslinie
E      Eindringtiefe
A, B   Punkte
G      genäherte Gerade
R      Roboterbahn
1      Arbeitsfläche
2      Berandung
3      Markierung

**Patentansprüche**

1. Verfahren zur Steuerung eines Mobilgeräts, das sich selbständig in einer Umgebung mit einer darin befindlichen Arbeitsfläche (1) bewegen kann, wobei eine Steuerungseinrichtung zur Planung und Festlegung der Bewegung vorgesehen ist, wobei die Richtung einer in der Umgebung befindlichen Navigationslinie (N) durch hierzu verwendete Sensoren und/oder durch wenigstens teilweises Abfahren und hierzu ermittelte Odometriedaten erfasst wird, und dass relativ zu dieser Richtung unter einem Abstoßungswinkel eine Bewegung des Mobilgeräts vollzogen wird, und geplante Bewegungsmuster zur Überstreichung von Teilflächen der Arbeitsfläche (1) ausgeführt werden, wobei die Länge der Abstoßungsbewegung durch die Sensierungsgenauigkeit und die Ausführungsgenauigkeit beschränkt wird,
**dadurch gekennzeichnet,**
**dass** eine Fehlausführung der Bewegung entlang von Teilstücken des Bewegungsmusters

   • in Richtung erkannt wird durch Vergleich von tatsächlichem ($\alpha 4$) und erwartetem ($\alpha$) Aufschlagwinkel auf eine Navigationslinie und/oder
   • in Richtung erkannt wird durch Vergleich von erwarteter und tatsächlich sensierter Richtung einer Navigationslinie relativ zum Mobilgerät und/oder
   • in Länge erkannt wird durch Vergleich von tatsächlicher und erwarteter Distanz bis zu einer Navigationslinie (N)

   und insbesondere eine entsprechende Parameteradaption der Bewegungsausführung des Bewegungsmusters durchgeführt wird, so dass in weiterer Abfolge von Teilstücken Fehlausführungen vermieden oder gemindert werden können.

2. Verfahren zur Steuerung eines Mobilgeräts nach Anspruch 1,
**dadurch gekennzeichnet,**
**dass** die Eindringtiefe (E) durch die Sensierungsgenauigkeit und die Ausführungsgenauigkeit beschränkt wird.

3. Verfahren zur Steuerung eines Mobilgeräts nach Anspruch 1 oder 2,
**dadurch gekennzeichnet,**
**dass** die Länge der Abstoßungsbewegung durch eine monoton wachsende Funktion der Entfernung begrenzt wird, für welche das Mobilgerät unmittelbar zuvor einer Navigationslinie (N) gefolgt ist.

4. Verfahren zur Steuerung eines Mobilgeräts nach Anspruch 1 oder 2,
**dadurch gekennzeichnet,**
**dass** die Entfernung, für welche das Mobilgerät einer Navigationslinie (N) folgt, automatisch und/oder manuell so gewählt wird, dass eine darauf folgende Abstoßungsbewegung mit vorgegebener Länge und Präzision bezüglich Sensierungsgenauigkeit und Ausführungsgenauigkeit ausgeführt werden kann.

5. Verfahren zur Steuerung nach einem der Ansprüche 1 bis 4,
**dadurch gekennzeichnet,**
**dass** das Bewegungsmuster so ausgestaltet ist, dass ein Zurückkehren zur Navigationslinie (N) nach wenigen gefahrenen Teilstücken (Ti) und geringer zurückgelegter Distanz erfolgt und eine erneute Abstoßung unter einem von der Steuerungseinrichtung gemäß der erfassten Richtung und/oder der Position in der Umgebung und/oder dem Verlauf der Navigationslinie (N) festgelegten Abstoßungswinkel ($\alpha$) vollzogen wird.

6. Verfahren zur Steuerung nach einem der Ansprüche 1 bis 5,
**dadurch gekennzeichnet,**

**dass** das Bewegungsmuster so ausgestaltet ist, dass nach dem Erreichen der Navigationslinie (N) dieser eine vorgegebene Strecke gefolgt wird.

7. Verfahren zur Steuerung nach einem der Ansprüche 1 bis 6,
**dadurch gekennzeichnet,**
**dass** der Verlauf der Navigationslinie (N) bezüglich seiner Gekrümmtheit erfasst wird, und eine Anpassung des Abstoßungswinkels ($\alpha$) dergestalt vorgenommen wird, dass die Teilstücke (Ti) im wesentlichen zueinander parallel gefahrenen werden.

8. Verfahren zur Steuerung nach einem der Ansprüche 1 bis 7,
**dadurch gekennzeichnet,**
**dass** das Bewegungsmuster so ausgestaltet ist, dass die Navigationslinie (N), sofern sie im Inneren der Arbeitsfläche liegt, unter mehrfacher Überstreichung abgefahren wird.

9. Mobilgerät, das sich selbsttätig in einer Umgebung mit einer darin befindlichen Arbeitsfläche (1) bewegen kann, und zur Ausführung des Verfahrens nach einem der Ansprüche 1 bis 8, wobei eine Steuerungseinrichtung zur Planung und Festlegung der Bewegung vorgesehen ist,
wobei die Richtung einer in der Umgebung befindlichen Navigationslinie (N) durch hierzu verwendete Sensoren und/oder durch wenigstens teilweises Abfahren und hierzu ermittelte Odometriedaten erfasst wird,
und dass relativ zu dieser Richtung unter einem Abstoßungswinkel ($\alpha$) eine Bewegung des Mobilgeräts vollzogen wird, und geplante Bewegungsmuster zur Überstreichung von Teilflächen der Arbeitsfläche ausgeführt werden.

10. Mobilgerät nach Anspruch 9,
**dadurch gekennzeichnet,**
es sich bei dem Mobilgerät um ein Gerät zur Flächenbearbeitung handelt.

**Claims**

1. A method for controlling a mobile device which is autonomously movable in an environment with a work surface (1) located therein, wherein a control unit for planning and determining of the movement is provided, wherein the direction of a navigation line (N) situated in the environment is detected by sensors used for this purpose and/or by at least partially tracing it by moving there along and by odometry data determined for this purpose,
and that relative to said direction and at a repulsion angle, a movement of the mobile device is performed, and planned movement patterns for traversing sub-surfaces of the work surface (1) are executed,
wherein the length of the repulsion movement is limited by the sensing accuracy and the execution accuracy,
**characterized in**
**that** a false execution of the movement along sections of the movement pattern

- is recognized with respect to the direction by comparison of actual ($\alpha4$) and expected ($\alpha$) angle of incident on a navigation line and/or
- is recognized with respect to the direction by comparison of expected and actually sensed direction of a navigation line relative to the mobile device, and/or
- is recognized with respect to the length by comparison of actual and expected distance to a navigation line (N),

and, in particular, an adequate parameter adaptation of the movement execution of the movement pattern is carried out, so that in further succession of sections, false executions can be avoided or reduced.

2. The method for controlling a mobile device according to claim 1,
**characterized in**
the penetration depth (E) is limited by the sensing accuracy and the execution accuracy.

3. The method for controlling a mobile device according to claim 1 or claim 2,
**characterized in**
**that** the length of the repulsion movement is limited by a monotonically increasing function of the distance for which the mobile device has immediately previously followed a navigation line (N).

4. The method for controlling a mobile device according to claim 1 or claim 2,

**characterized in**
**that** the distance for which the mobile device follows a navigation line (N) is automatically and/or manually selected in such a manner that a subsequent repulsion movement with predefined length and precision with respect to sensing accuracy and execution accuracy can be carried out.

5. The method for controlling according to any one of the claims 1 to 4,
**characterized in**
**that** the movement pattern is configured in such a manner that a return to the navigation line (N) takes place after a few sections (Ti) driven and a short distance covered and a new repulsion is performed again at a repulsion angle ($\alpha$) which is determined by the control unit according to the detected direction and/or the position in the environment and/or the course of the navigation line (N).

6. The method for controlling according to any one of the claims 1 to 5,
**characterized in**
**that** the movement pattern is configured in such a manner that after reaching the navigation line (N), the same is being followed over a predetermined distance.

7. The method for controlling according to any one of the claims 1 to 6,
**characterized in**
**that** the course of the navigation line (N) is detected with respect to its curvature and an adaptation of the repulsion angle ($\alpha$) is carried out in such a manner that the sections (Ti) are moved substantially parallel to one another.

8. The method for controlling according to any one of the claims 1 to 7,
**characterized in**
**that** the movement pattern is configured in such a manner that the navigation line (N), provided the same is located inside the work surface, is traced by moving along the navigation line thereby traversing it multiple times.

9. A mobile device which is autonomously movable in an environment with a work surface (1) located therein and for carrying out the method according to any one of the claims 1 to 8, wherein a control unit for planning and determining the movement is provided,
wherein the direction of a navigation line (N) situated in the environment is detected by sensors used for this purpose and/or by at least partially tracing it by moving there along and by odometry data determined for this purpose,
and that relative to said direction and at a repulsion angle ($\alpha$), a movement of the mobile device is performed, and planned movement patterns for traversing sub-surfaces of the work surface are executed.

10. The mobile device according o claim 9,
**characterized in**
**that** the mobile device is a device for machining surfaces.

**Revendications**

1. Procédé pour commander un appareil mobile, qui peut se déplacer de façon autonome dans un environnement avec une surface de travail (1) se trouvant à l'intérieur, un dispositif de commande étant prévu pour la planification et la spécification du déplacement, la direction d'une ligne de navigation (N) se trouvant dans l'environnement étant enregistrée par des capteurs utilisés à cet effet et/ou par un départ au moins partiel et des données d'odométrie déterminées à cet effet,
et un déplacement de l'appareil mobile étant effectué par rapport à cette direction sous un angle de répulsion, et des modèles de déplacement prévus étant exécutés pour le balayage de surfaces partielles de la surface de travail (1),
la longueur du déplacement de répulsion étant limitée par la précision de détection et la précision d'exécution,
**caractérisé en ce que**
une erreur d'exécution du déplacement le long de tronçon du modèle de déplacement

• est détectée en direction par comparaison de l'angle d'impact réel ($\alpha$4) et de l'angle d'impact escompté ($\alpha$) sur une ligne de navigation et/ou
• est détectée en direction par comparaison de la direction escomptée et de la direction réellement détectée d'une ligne de navigation par rapport à l'appareil mobile et/ou
• est détectée en longueur par comparaison de la distance réelle et de la distance escomptée jusqu'à une ligne de navigation (N)

et en particulier une adaptation de paramètre appropriée de l'exécution du déplacement du modèle de déplacement est effectuée, de sorte que des exécutions erronées peuvent être évitées ou réduites dans une autre succession de tronçons.

2. Procédé pour commander un appareil mobile selon la revendication 1,
   **caractérisé en ce que**
   la profondeur de pénétration (E) est limitée par la précision de détection et la précision d'exécution.

3. Procédé pour commander un appareil mobile selon la revendication 1 ou 2,
   **caractérisé en ce que**
   la longueur du déplacement de répulsion est limitée par une fonction croissant de façon monotone de la distance, pour laquelle l'appareil mobile a suivi juste auparavant une ligne de navigation (N).

4. Procédé pour commander un appareil mobile selon la revendication 1 ou 2,
   **caractérisé en ce que**
   la distance, pour laquelle l'appareil mobile suit une ligne de navigation (N), est choisie de façon automatique et/ou manuelle de telle sorte qu'un mouvement de répulsion consécutif peut être exécuté avec une longueur et une précision prédéfinies par rapport à la précision de détection et à la précision d'exécution.

5. Procédé pour commander selon l'une quelconque des revendications 1 à 4,
   **caractérisé en ce que**
   le modèle de déplacement est conçu de telle sorte qu'un retour à la ligne de navigation (N) intervient après quelques tronçons (Ti) parcourus et une faible distance parcourue et une nouvelle répulsion est effectuée sous un angle de répulsion ($\alpha$) fixé par le dispositif de commande selon la direction enregistrée et/ou la position dans l'environnement et/ou le tracé de la ligne de navigation (N).

6. Procédé pour commander selon l'une quelconque des revendications 1 à 5,
   **caractérisé en ce que**
   le modèle de déplacement est conçu de telle sorte que, après avoir atteint la ligne de navigation (N), celle-ci suit un tronçon prédéfini.

7. Procédé pour commander selon l'une quelconque des revendications 1 à 6,
   **caractérisé en ce que**
   le tracé de la ligne de navigation (N) est enregistré en ce qui concerne sa courbure, et une adaptation de l'angle de répulsion ($\alpha$) est effectuée de telle sorte que les tronçons (Ti) sont parcourus principalement en parallèle les uns par rapport aux autres.

8. Procédé pour commander selon l'une quelconque des revendications 1 à 7,
   **caractérisé en ce que**
   le mouvement de déplacement est conçu de telle sorte que la ligne de navigation (N) est parcourue avec un balayage multiple, dans la mesure où elle est disposée à l'intérieur de la surface de travail.

9. Appareil mobile, qui peut se déplacer automatiquement dans un environnement avec une surface de travail (1) se trouvant à l'intérieur, et pour la mise en oeuvre du procédé selon l'une quelconque des revendications 1 à 8, un dispositif de commande étant prévu pour la planification et la définition du déplacement,
   la direction d'une ligne de navigation (N) se trouvant dans l'environnement étant enregistrée par des capteurs utilisés à cet effet et/ou par un départ au moins partiel et des données d'odométrie déterminées à cet effet,
   et en ce qu'un déplacement de l'appareil mobile est effectué par rapport à cette direction sous un angle de répulsion ($\alpha$), et des modèles de déplacement prévus sont exécutés pour le balayage de surfaces partielles de la surface de traitement.

10. Appareil mobile selon la revendication 9,
    **caractérisé en ce**
    **qu'**il s'agit d'un appareil pour le traitement de surface en ce qui concerne l'appareil mobile.

**Fig. 1**

**Fig. 2**

**Fig. 3**

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03040846 A
- WO 9959042 A
- FR 2861855 A
- WO 03040846 A1